# EUROPEAN PATENT APPLICATION

(11) **EP 3 522 184 A1**
(43) Date of publication of application: **07.08.2019**
(21) Application number: 17856068.6
(22) Date of filing: 26.09.2017
(51) Int. Cl.: H01F 38/14, H01F 5/02, H01F 27/28, B60L 11/18, B60M 7/00

(54) **CONTACTLESS POWER FEEDING COIL UNIT**

(30) Priority: 28.09.2016 JP 2016189056
(71) Applicant: Nidec Corporation, Kyoto-shi, Kyoto 601-8205 (JP)
(72) Inventor: YAMAMOTO,Atsushi, Kyoto-shi Kyoto 601-8205 (JP)
(74) Representative: Stöckeler, Ferdinand
(86) International application number: PCT/JP2017/034605
(87) International publication number: WO 2018/062117

(57) **Abstract**

[Object] There is a problem in that it is not possible to increase the number of coils connected in series and the amount of electric power that can be transmitted by a wireless power supply device cannot be increased.

[Solution] A contactless power supply coil unit according to an aspect of the present invention includes a plurality of coils wound around a predetermined center axis and a holding member that holds the plurality of coils. The plurality of coils are disposed at intervals so as to overlap each other in a radial direction and form respective annular layers that are stacked in the radial direction. The coils forming the layers that are adjacent to each other are connected in series to each other. The intervals between the layers that are adjacent to each other increase as the intervals are located progressively toward a radial-direction outer side.

## Description

### Technical Field

The present invention relates to a contactless power supply coil unit.

### Background Art

To date, a wireless power supply device that supplies power without a power cord is known. For example, PTL 1 discloses a structure in which a plurality of substrates, which have spiral-shaped grooves in which coil conductors are arranged, are stacked on each other in multiple layers.

### Citation List

### Patent Literature

PTL 1: Japanese Unexamined Patent Application Publication No. 2011-086890

### Summary of Invention

### Technical Problem

In the wireless power supply device as described above, it is conceivable that coils may be stacked in multiple layers in a radial direction. In this case, because the inner diameters of the coils increase as the coils are wound toward the radial-direction outer side, the inductance and resistance of the coils are increased. Therefore, the potential difference between the coils disposed on the radial-direction outer side becomes large and a discharge phenomenon is likely to occur. Therefore, there is a problem in that it is not possible to increase the number of coils connected in series, and the amount of electric power that can be transmitted by the wireless power supply device cannot be increased.

In view of the above problem, an object of the present invention is to provide a contactless power supply coil unit having a structure capable of suppressing the occurrence of a discharge phenomenon.

### Solution to Problem

A contactless power supply coil unit according to an aspect of the present invention includes a plurality of coils wound around a predetermined center axis and a holding member that holds the plurality of coils. The plurality of coils are disposed at intervals so as to overlap each other in a radial direction and form respective annular layers stacked in a radial direction. The coils forming the layers that are adjacent to each other are connected in series to each other. The intervals between the layers that are adjacent to each other increase as the intervals are located progressively toward a radial-direction outer side.

### Advantageous Effects of Invention

According to an aspect of the present invention, there is provided a contactless power supply coil unit having a structure capable of suppressing the occurrence of a discharge phenomenon.

### Brief Description of Drawings

Fig. 1 is a perspective view illustrating a contactless power supply coil unit according to the present embodiment.
Fig. 2 is a diagram illustrating the contactless power supply coil unit of the present embodiment, and is a sectional view taken along the line II-II of Fig. 1.
Fig. 3 is a schematic diagram of a coil of the present embodiment as viewed from above.
Fig. 4 is a schematic diagram illustrating a circuit configuration of the contactless power supply coil unit of the present embodiment.
Fig. 5 is an exploded perspective view illustrating a portion of a holding member of the present embodiment.
Fig. 6 is a front view illustrating the assembly of the contactless power supply coil unit of the present embodiment in process.

### Description of Embodiments

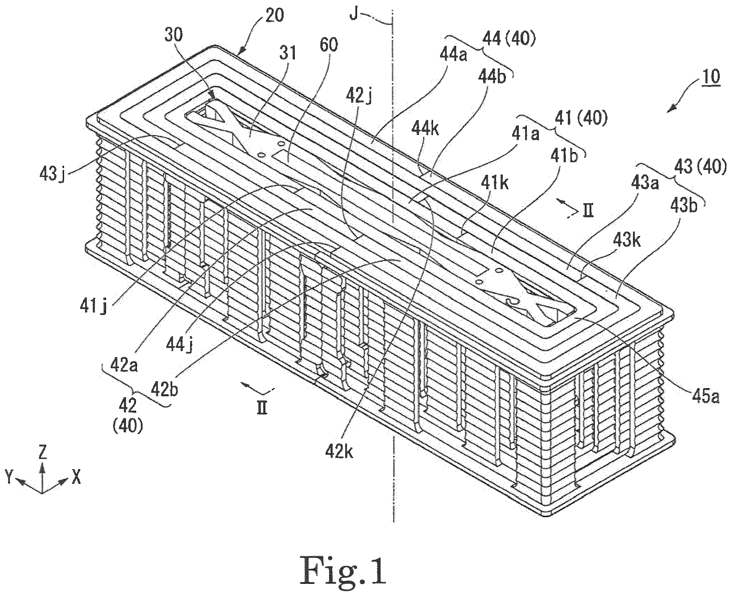

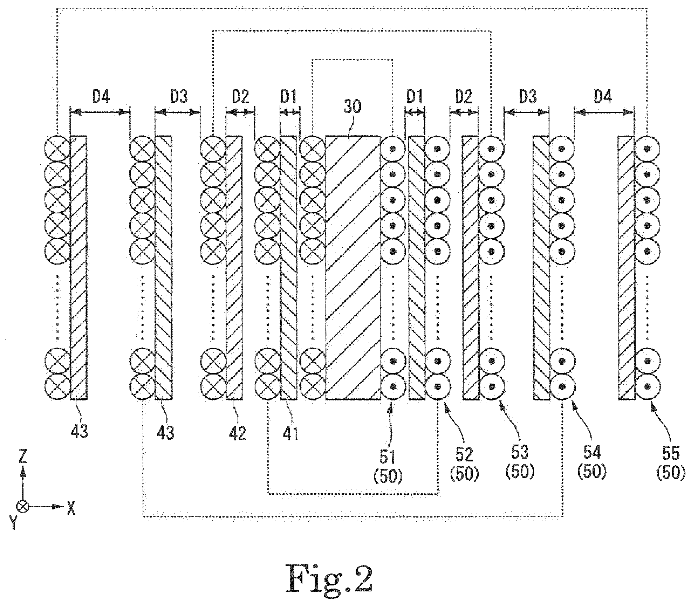

As illustrated in Fig. 1 and Fig. 2, a contactless power supply coil unit 10 of the present embodiment includes a plurality of coils 50 wound around a predetermined center axis J, and a holding member 20 that holds the plurality of coils 50. In Fig. 1, the center axis J extends in the up down direction. In the following description, a direction parallel to the center axis J will be simply referred to as "axial direction", a radial direction with the center axis J as the center will be simply referred to as "radial direction", and a circumferential direction with the center axis J as the center will be simply referred to as "circumferential direction". In addition, the upper side in the axial direction in Fig. 1 will be simply referred to as "upper side", and the lower side in the axial direction in Fig. 1 will be simply referred to as "lower side". In the present embodiment, the lower side corresponds to one axial-direction side. In the present embodiment, the upper side corresponds to the other axial-direction side. Further, it should be noted that the upper side and the lower side are simply terms for explaining the relative positional relationship between the respective parts and do not limit the actual arrangement relationship or the like.

In addition, in the XYZ axis coordinate system appropriately indicated in each drawing, the Z-axis direction is a direction parallel to the center axis J, that is, the axial direction. The X-axis direction is a direction perpendicular to the Z-axis direction and is a direction parallel to the long-side direction of the contactless power supply coil unit 10. The X-axis direction is a direction perpendicular to both the Z-axis direction and the Y-axis direction and is a direction parallel to the short-side direction of the contactless power supply coil unit 10. In the following description, the direction parallel to the Y-axis direction will be simply referred to as "long-side direction", and the direction parallel to the X-axis direction will be simply referred to as "short-side direction". Further, the coils 50 are not illustrated in Fig. 1.

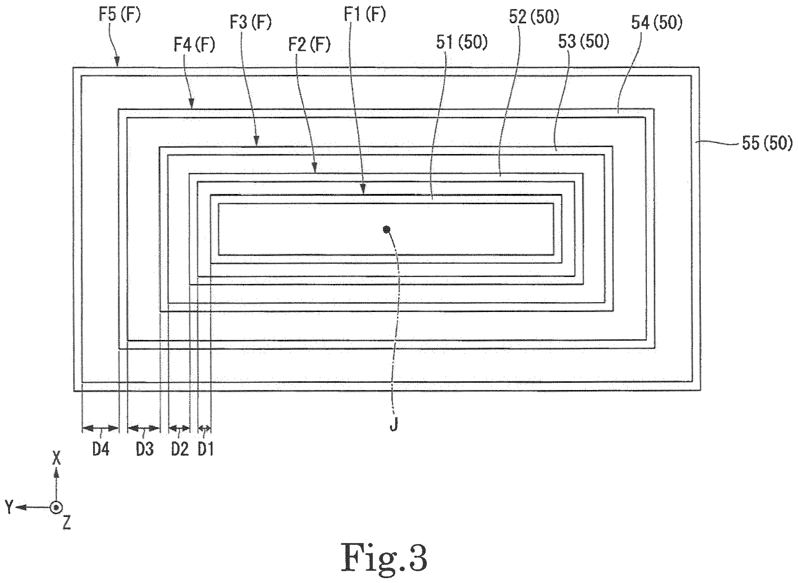

As illustrated in Fig. 2 and Fig. 3, the plurality of coils 50 are disposed at intervals so as to overlap each other in the radial direction and form respective annular layers F stacked in the radial direction. The coils 50 of the present embodiment are, for example, provided as five coils, a first coil 51 to a fifth coil 55. Five layers F formed by the first coil 51 to the fifth coil 55, namely, a first layer F1 to a fifth layer F5, are provided. The first coil 51 forms the first layer F1. A second coil 52 forms a second layer F2. A third coil 53 forms a third layer F3. A fourth coil 54 forms a fourth layer F4. The fifth coil 55 forms the fifth layer F5. The first coil 51, the second coil 52, the third coil 53, the fourth coil 54, and the fifth coil 55 are disposed in this order from a radial-direction inner side to a radial-direction outer side.

As illustrated in Fig. 3, in the present embodiment, each of the coils 50 and each of the layers F are rectangular annular shapes elongated in the long-side direction in plan view. The second coil 52 and the second layer F2 are disposed on the radial-direction outer side of the first coil 51 and the first layer F1 and surround the first coil 51 and the first layer F1. The third coil 53 and the third layer F3 are disposed on the radial-direction outer side of the second coil 52 and the second layer F2 and surround the second coil 52 and the second layer F2. The fourth coil 54 and the fourth layer F4 are disposed on the radial-direction outer side of the third coil 53 and the third layer F3 and surround the third coil 53 and the third layer F3. The fifth coil 55 and the fifth layer F5 are disposed on the radial-direction outer side of the fourth coil 54 and the fourth layer F4 and surround the fourth coil 54 and the fourth layer F4.

The inner diameters of the coils 50 become respectively larger as the coils 50 are located progressively toward the radial-direction outer side. That is, the inner diameter of the second coil 52 is larger than the inner diameter of the first coil 51. The inner diameter of the third coil 53 is larger than the inner diameter of the second coil 52. The inner diameter of the fourth coil 54 is larger than the inner diameter of the third coil 53. The inner diameter of the fifth coil 55 is larger than the inner diameter of the fourth coil 54.

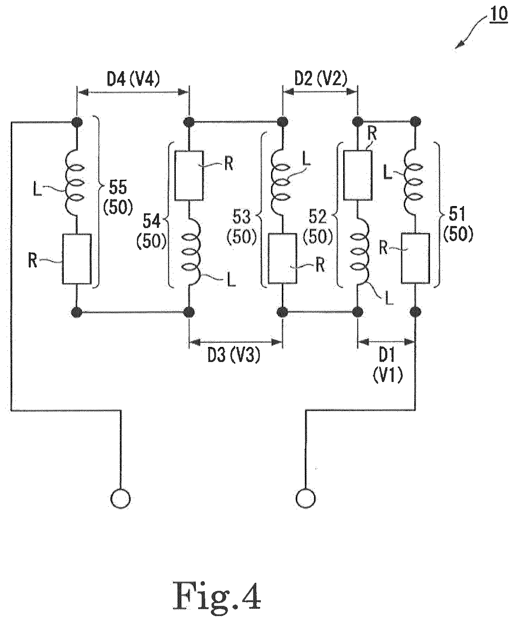

As illustrated in Fig. 4, the coils 50 forming the layers F that are adjacent to each other are connected to each other in series. That is, in the present embodiment, the five coils 50 are connected in series in the radial direction. Each of the coils 50 has an inductance L and a resistance R. Although not illustrated, the five coils 50 connected in series are connected to a capacitor and an AC power source, and form an RLC series resonance circuit. The contactless power supply coil unit 10 of the present embodiment is used, for example, in a magnetic-field-resonance type contactless power supply device.

In the case where the numbers of windings and the wire diameters of the coils 50 are the same, the larger the inner diameter of the coil 50, the larger the inductance L and the resistance R of the coil 50. That is, the inductance L and the resistance R of the second coil 52 are larger than the inductance L and the resistance R of the first coil 51. The inductance L and the resistance R of the third coil 53 are larger than the inductance L and the resistance R of the second coil 52. The inductance L and the resistance R of the fourth coil 54 are larger than the inductance L and the resistance R of the third coil 53. The inductance L and the resistance R of the fifth coil 55 are larger than the inductance L and the resistance R of the fourth coil 54. As a result, the voltage applied to each of the coils 50 increases as the coils 50 are located progressively toward the radial-direction outer side.

As illustrated in Fig. 2 and Fig. 3, an interval D1 between the first layer F1 and the second layer F2 is the interval between a radial-direction-outer-side surface of the first coil 51 and a radial-direction-inner-side surface of the second coil 52. An interval D2 between the second layer F2 and the third layer F3 is the interval between a radial-direction-outer-side surface of the second coil 52 and a radial-direction-inner-side surface of the third coil 53. An interval D3 between the third layer F3 and the fourth layer F4 is the interval between a radial-direction-outer-side surface of the third coil 53 and a radial-direction-inner-side surface of the fourth coil 54. An interval D4 between the fourth layer F4 and the fifth layer F5 is the interval between a radial-direction-outer-side surface of the fourth coil 54 and a radial-direction-inner-side surface of the fifth coil 55. In the present embodiment, the intervals D1 to D4 are substantially uniform over the entire circumferential direction. The intervals D1 to D4 of the layers F that are adjacent to each other increase as the intervals are located progressively toward the radial-direction outer side. That is, the interval D2 is larger than the interval D1. The interval D3 is larger than the interval D2. The interval D4 is larger than the interval D3. That is, the magnitudes of the intervals D1 to D4 are D1 <D2<D3<D4.

A potential difference V1 between the winding start of the first coil 51 and the winding end of the second coil 52 illustrated in Fig. 4 is the sum of the value of the voltage applied to the first coil 51 and the value of the voltage applied to the second coil 52. A potential difference V2 between the winding start of the second coil 52 and the winding end of the third coil 53 is the sum of the value of the voltage applied to the second coil 52 and the value of the voltage applied to the third coil 53. A potential difference V3 between the winding start of the third coil 53 and the winding end of the fourth coil 54 is the sum of the value of the voltage applied to the third coil 53 and the value of the voltage applied to the fourth coil 54. A potential difference V4 between the winding start of the fourth coil 54 and the winding end of the fifth coil 55 is the sum of the value of the voltage applied to the fourth coil 54 and the value of the voltage applied to the fifth coil 55.

As described above, the voltages applied to the coils 50 increase as the coils 50 are located progressively toward the radial-direction outer side. Therefore, the potential difference V1, the potential difference V2, the potential difference V3, and the potential difference V4 increase in this order. As a result, a discharge phenomenon is more likely to occur between the coils 50 positioned on the radial-direction outer side. On the other hand, according to the present embodiment, because the intervals between the coils 50 increase as the coils are located progressively toward the radial-direction outer side, the coils 50 can be disposed further apart as the potential difference increases. Therefore, the occurrence of a discharge phenomenon can be suppressed. As a result, the number of the coils 50 connected in series can be increased and the voltage that can be applied to each of the coils 50 can also be increased. Therefore, it is possible to increase the amount of electric power that can be transmitted by the contactless power supply device in which the contactless power supply coil unit 10 is mounted.

As illustrated in Fig. 1, the holding member 20 includes a core member 30, a plurality of cylindrical members 40, and a core 60. The core member 30 is disposed along the center axis J. The core member 30 has a substantially rectangular parallelepiped shape that is elongated in the long-side direction.

The plurality of cylindrical members 40 are disposed at intervals on the radial-direction outer side of the core member 30 and have a cylindrical shape that surrounds the core member 30. As illustrated in Fig. 1, in the present embodiment, each of the cylindrical members 40 has a rectangular cylindrical shape that opens in the up down direction and is elongated in the long-side direction. The plurality of cylindrical members 40 are disposed at intervals so as to overlap each other in the radial direction. In the present embodiment, four cylindrical members 40, namely, a first cylindrical member 41, a second cylindrical member 42, a third cylindrical member 43, and a fourth cylindrical member 44, are provided. The first cylindrical member 41 to the fourth cylindrical member 44 have substantially the same structure except for differences in size. Therefore, in the following description, only the first cylindrical member 41 will be described as representative in some cases.

As illustrated in Fig. 2, among the plurality of coils 50, the first coil 51 disposed most toward the radial-direction inner side is wound around the core member 30. The first coil 51 is wound along the axial direction from a lower end portion of the core member 30 toward an upper end portion of the core member 30. Among the plurality of coils 50, each of the other ones of the coils 50 disposed on the radial-direction outer side of the first coil 51 is wound around a corresponding one of the plurality of cylindrical members 40. Specifically, the second coil 52 is wound around the first cylindrical member 41. The third coil 53 is wound around the second cylindrical member 42. The fourth coil 54 is wound around the third cylindrical member 43. The fifth coil 55 is wound around the fourth cylindrical member 44.

Therefore, it is easy to dispose the plurality of coils 50 in the radial direction. In addition, because the intervals D1 to D4 can be adjusted by adjusting the inner diameters and the outer diameters of the cylindrical members 40, it is easy to increase the intervals D1 to D4 toward the outer side in the radial direction. In addition, as compared with the case where the coils 50 are stacked on each other with, for example, an insulating tape or the like therebetween, it is easy for air to pass between the coils 50, and heat is not likely to be trapped in the contactless power supply coil unit 10. As a result, it is possible to suppress the contactless power supply coil unit 10 from reaching a high temperature. In addition, because the coils 50 adjacent to the radial-direction inner side of the cylindrical members 40 can be held down from the radial-direction outer side by the cylindrical members 40, it is possible to suppress loosening of the coils 50.

The second coil 52 is wound in the axial direction from an upper end portion of the first cylindrical member 41 toward a lower end portion of the first cylindrical member 41. The third coil 53 is wound in the axial direction from a lower end portion of the second cylindrical member 42 toward an upper end portion of the second cylindrical member 42. The fourth coil 54 is wound in the axial direction from an upper end portion of the third cylindrical member 43 toward a lower end portion of the third cylindrical member 43. The fifth coil 55 is wound in the axial direction from a lower end portion of the fourth cylindrical member 44 toward an upper end portion of the fourth cylindrical member 44. That is, among the core member 30 and the plurality of cylindrical members 40, for two members adjacent to each other, axial-direction end portions of the coils 50 that each correspond to the winding start of the coil 50 to be wound and axial-direction end portions of the coils 50 that each correspond to the winding end of the coil 50 to be wound, are located on opposite upper and lower sides.

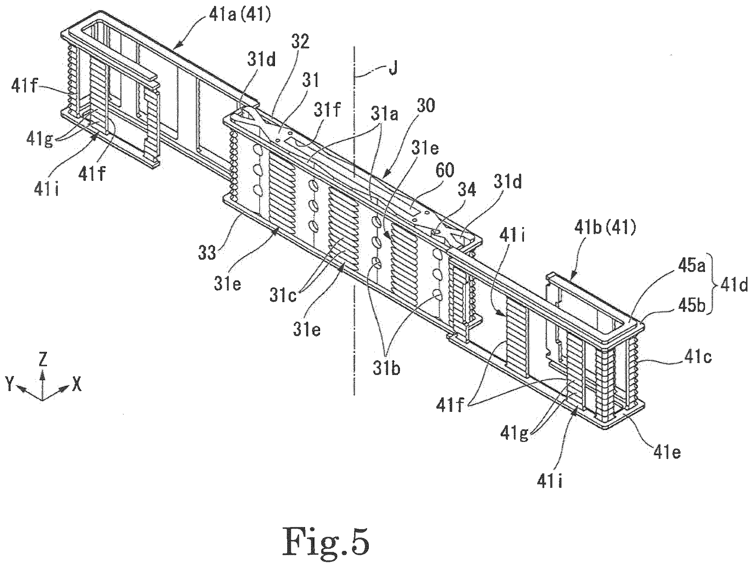

As illustrated in Fig. 5, the core member 30 has a body portion 31, an upper-side flange portion 32, and a lower-side flange portion 33. The body portion 31 is a portion around which the first coil 51 is wound. The body portion 31 has a substantially rectangular parallelepiped shape that is elongated in the long-side direction. The body portion 31 has a hole portion 31f that is recessed in the axial direction. That is, the core member 30 has the hole portion 31f that is recessed in the axial direction. In the present embodiment, the body portion 31 has a bottomed square cylindrical shape. The plan view shape of the hole portion 31f is a rectangular shape that is elongated in the long-side direction. The hole portion 31f is arranged at the center of the core member 30 in plan view. Further, the body portion 31 may have a cylindrical shape and the body portion 31 may have a hole penetrating in the axial direction.

The body portion 31 has a plurality of grooves 31c recessed from a radial-direction-outer-side surface to the radial-direction inner side. That is, the core member 30 has the plurality of grooves 31c recessed from a radial-direction-outer-side surface to the radial-direction inner side. The plurality of grooves 31c extend along the circumferential direction. In the present embodiment, a predetermined number of the grooves 31c are arranged side by side in the axial direction to form groove groups 31e. The plurality of groove groups 31e are provided along the circumferential direction. The number of the grooves 31c forming each of the groove groups 31e is the same as the number of windings of the first coil 51.

The first coil 51, that is, the coil 50, is wound along the grooves 31c. Therefore, it is easy to wind the first coil 51 around the core member 30. In addition, as in the groove groups 31e of the present embodiment, by making the number of grooves arranged in the axial direction the same as the number of windings of the first coil 51, it is not necessary to count the number of windings when winding the first coil 51, which is convenient.

The body portion 31 has recessed portions 31a and 31d recessed from the radial-direction-outer-side surface toward the radial-direction inner side. The recessed portions 31a are arranged on surfaces extending in the long-side direction among radial-direction-outer-side surfaces of the body portion 31, and are recessed in the short-side direction. The recessed portions 31a extend in the axial direction from an upper end to a lower end of the body portion 31. The plurality of recessed portions 31a are provided along the long-side direction, and are arranged between the groove groups 31e adjacent to each other in the long-side direction. The shape of each of the recessed portions 31a in plan view is a V shape opening to the radial-direction outer side.

The maximum value of the recess amount of the recessed portions 31a is larger than the maximum value of the recess amount of the grooves 31c. Therefore, in each of the recessed portions 31a, a gap can be provided between the first coil 51 and the body portion 31. As a result, air can pass through the inside of the first coil 51, and the first coil 51 is easily cooled. Therefore, it is more difficult for heat to be trapped in the contactless power supply coil unit 10 and it is possible to further suppress the contactless power supply coil unit 10 from reaching a high temperature.

The recessed portions 31d are disposed on short-side-direction-extending surfaces among the radial-direction-outer-side surfaces of the body portion 31 and are recessed in the long-side direction. The recessed portions 31d extend in the axial direction from the upper end to the lower end of the body portion 31. Each of the recessed portions 31d in plan view has a V shape opening to the radial-direction outer side. The maximum value of the recess amount of the recessed portions 31d is larger than the maximum value of the recess amount of the grooves 31c. Therefore, also in the recessed portions 31d, a gap can be provided between the first coil 51 and the body portion 31. As a result, air can be more easily passed through the inside of the first coil 51 and the first coil 51 is more easily cooled. Therefore, it is more difficult for heat to be trapped in the contactless power supply coil unit 10 and it is possible to further suppress the contactless power supply coil unit 10 from reaching a high temperature.

The body portion 31 includes a hook portion 34. The hook portion 34 has a hook shape protruding from a bottom surface of one of the recessed portions 31a. A conductor forming the coils 50 is hooked to the hook portion 34. Thereby, the coils 50 can be stably held on the core member 30.

The core member 30 has second through holes 31b penetrating the body portion 31 of the core member 30 in a direction perpendicular to the axial direction. In the present embodiment, the second through holes 31b penetrate the core member 30 in the short-side direction. A plurality of the second through holes 31b are provided. The second through holes 31b are arranged so as to overlap the recessed portions 31a in the circumferential direction. Three second through holes 31b are provided for each of the recessed portions 31a. The three second through holes 31b in the corresponding one of the recessed portions 31a are arranged side by side in the axial direction. The shape of each of the second through holes 31b viewed in the short-side direction is a circular shape. Air can pass through the second through holes 31b in the short-side direction with respect to the core member 30 around which the first coil 51 is wound. Therefore, the first coil 51 is more easily cooled. Therefore, it is more difficult for heat to be trapped in the contactless power supply coil unit 10 and it is possible to further suppress the contactless power supply coil unit 10 from reaching a high temperature. Further, the second through holes 31b may penetrate the core member 30 in the long-side direction.

The outer shape of the upper-side flange portion 32 is a rectangular frame shape. The upper-side flange portion 32 is fixed to the radial-direction outer side of an upper end portion of the body portion 31 and surrounds the upper end portion of the body portion 31. The outer shape of the lower-side flange portion 33 is a rectangular frame shape. The lower-side flange portion 33 is fixed to the radial-direction outer side of a lower end portion of the body portion 31 and surrounds the lower end portion of the body portion 31.

The first cylindrical member 41 has a wall portion 41c, an upper-side flange portion 41d, and a lower-side flange portion 41e. The wall portion 41c is a rectangular cylindrical portion around which the second coil 52 is wound. The upper-side flange portion 41d is connected to an upper end portion of the wall portion 41c. The outer shape of the upper-side flange portion 41d is a rectangular frame shape. The upper-side flange portion 41d includes an inner-side flange portion 45a and an outer-side flange portion 45b.

The upper-side flange portion 41d includes the inner-side flange portion 45a and the outer-side flange portion 45b. The outer-side flange portion 45b is continuously provided on the radial-direction outer side of the inner-side flange portion 45a. The axial-direction position of the outer-side flange portion 45b is lower than the axial-direction position of the inner-side flange portion 45a. A step that descends from the radial-direction inner side to the radial-direction outer side is formed by the inner-side flange portion 45a and the outer-side flange portion 45b.

The lower-side flange portion 41e is connected to a lower end portion of the wall portion 41c. The lower-side flange portion 41e has a rectangular frame shape. Although not illustrated, the lower-side flange portion 41e includes the inner-side flange portion 45a and the outer-side flange portion 45b similarly to the upper-side flange portion 41d. The inner-side flange portion 45a and the outer-side flange portion 45b of the lower-side flange portion 41e are similar except that the inner-side flange portion 45a and the outer-side flange portion 45b of the lower-side flange portion 41e are upside down with respect to the inner-side flange portion 45a and the outer-side flange portion 45b of the upper-side flange portion 41d.

As illustrated in Fig. 1 and Fig. 5, the inner-side flange portion 45a is fitted to the upper end portion of the body portion 31. The inner-side flange portion 45a overlaps the upper-side flange portion 32 of the core member 30 in the axial direction. A lower surface of the inner-side flange portion 45a makes contact with an upper surface of the upper-side flange portion 32. An upper surface of the inner-side flange portion 45a is disposed at the same position in the axial direction as an upper surface of the body portion 31. Although not illustrated, the inner-side flange portion 45a of the lower-side flange portion 41e is fitted to the lower end portion of the body portion 31. The inner-side flange portion 45a of the lower-side flange portion 41e overlaps the lower-side flange portion 33 of the core member 30 in the axial direction. An upper surface of the inner-side flange portion 45a of the lower-side flange portion 41e is in contact with a lower surface of the lower-side flange portion 33. The lower surface of the inner-side flange portion 45a of the lower-side flange portion 41e is disposed at the same position in the axial direction as the lower surface of the body portion 31.

The inner-side flange portions on both axial-direction sides of the second cylindrical member 42 respectively surround the inner-side flange portions 45a on both axial-direction sides of the first cylindrical member 41 from the radial-direction outer side and are respectively fitted to the inner-side flange portions 45a of the first cylindrical member 41. The inner-side flange portions on both axial-direction sides of the second cylindrical member 42 respectively overlap and contact the outer-side flange portions 45b on both axial-direction sides of the first cylindrical member 41 in the axial direction. The inner-side flange portions on both axial-direction sides of the third cylindrical member 43 respectively surround the inner-side flange portions on both axial-direction sides of the second cylindrical member 42 from the outside in the radial direction and are respectively fitted to the inner-side flange portions of the second cylindrical member 42. The inner-side flange portions on both axial-direction sides of the third cylindrical member 43 respectively overlap and contact the outer-side flange portions on both axial-direction sides of the second cylindrical member 42 in the axial direction. The inner-side flange portions on both axial-direction sides of the fourth cylindrical member 44 respectively surround the inner-side flange portions on both axial-direction sides of the third cylindrical member 43 from the radial-direction outer side and are respectively fitted to the inner-side flange portions of the third cylindrical member 43. The inner-side flange portions on both axial-direction sides of the fourth cylindrical member 44 respectively overlap and contact the outer-side flange portions on both axial-direction sides of the third cylindrical member 43 in the axial direction. As described above, the core member 30 and the cylindrical members 40 are connected to each other. According to this configuration, because the respective cylindrical members 40 are assembled while being guided by the core member 30 or a corresponding one of the cylindrical members 40 located on the radial-direction inner side, the assembler can easily assemble the cylindrical members 40.

The upper surfaces of the inner-side flange portions of the upper-side flange portions of the cylindrical members 40 are arranged at the same position in the axial direction. The lower surfaces of the inner-side flange portions of the lower-side flange portions of the cylindrical members 40 are arranged at the same position in the axial direction.

As illustrated in Fig. 5, the wall portion 41c has first through holes 41f penetrating the wall portion 41c from a radial-direction-inner-side surface to a radial-direction-outer-side surface. That is, each of the cylindrical members 40 has the first through holes 41f that penetrate the wall portion 41c of the cylindrical member 40 from the radial-direction-inner-side surface of the cylindrical member 40 to the radial-direction-outer-side surface of the cylindrical member 40. Therefore, air can pass through the first cylindrical member 41 via the first through holes 41f, and the first coil 51 and the second coil 52 are easily cooled. Therefore, it is more difficult for heat to be trapped in the contactless power supply coil unit 10 and it is possible to further suppress the contactless power supply coil unit 10 from reaching a high temperature.

In the present embodiment, a plurality of the first through holes 41f are provided along the circumferential direction. The first through holes 41f include the first through holes 41f penetrating the wall portion 41c in the long-side direction and the first through holes 41f penetrating the wall portion 41c in the short-side direction. The shape of the first through holes 41f is rectangular as viewed along the long-side direction or the short-side direction. The first through holes 41f extend from the upper end portion to lower end portion of the wall portion 41c over the entirety of the wall portion 41c in the axial direction. In the present embodiment, the region where the first through holes 41f are provided in the wall portion 41c is larger than the region where the first through holes 41f are not provided in the wall portion 41c. By providing the first through holes 41f in this manner, the wall portion 41c in the present embodiment has a plurality of plate-like pillar shapes connecting the upper-side flange portion 41d and the lower-side flange portion 41e in the axial direction.

The wall portion 41c has a plurality of grooves 41g recessed from the radial-direction-outer-side surface toward the radial-direction inner side. That is, the plurality of cylindrical members 40 have a plurality of the grooves 41g recessed from the radial-direction-outer-side surface to the radial-direction inner side. The plurality of grooves 41g extend along the circumferential direction. In the present embodiment, a predetermined number of the grooves 41g are arranged side by side in the axial direction to form a groove group 41i. The groove group 41i is provided in the wall portion 41c. The grooves 41g extend from one end to the other end in the circumferential direction. The number of the grooves 41g forming the groove group 41i is the same as the number of windings of the second coil 52.

The second coil 52, that is, the coil 50 is wound along the grooves 41g. Therefore, it is easy to wind the second coil 52 around the first cylindrical member 41. In addition, as in the groove group 41i of the present embodiment, by making the number of grooves arranged in the axial direction the same as the number of windings of the second coil 52, it is not necessary to count the number of windings when winding the second coil 52, which is convenient.

In the present embodiment, the cylindrical members 40 are formed by connecting a plurality of cylindrical member pieces divided in the circumferential direction. Therefore, the cylindrical members 40 can be formed by bringing the cylindrical member pieces together from the radial-direction outer side of the coils 50 and combining them after the coils 50 have been wound around the core member 30 or the cylindrical members 40. As a result, it is easy to assemble the contactless power supply coil unit 10.

In the present embodiment, each of the cylindrical members 40 is formed by connecting two cylindrical member pieces facing each other in the long-side direction. As illustrated in Fig. 1, the first cylindrical member 41 is formed by connecting a cylindrical member piece 41a and a cylindrical member piece 41b. The second cylindrical member 42 is formed by connecting a cylindrical member piece 42a and a cylindrical member piece 42b. The third cylindrical member 43 is formed by connecting a cylindrical member piece 43a and a cylindrical member piece 43b. The fourth cylindrical member 44 is formed by connecting a cylindrical member piece 44a and a cylindrical member piece 44b.

As illustrated in Fig. 1, in the first cylindrical member 41, the positions of two connection portions 41j and 41k at which the cylindrical member pieces 41a and 41b are connected to each other are different from each other in the long-side direction. In the second cylindrical member 42, the positions of two connection portions 42j and 42k at which the cylindrical member pieces 42a and 42b are connected to each other are different from each other in the long-side direction. In the third cylindrical member 43, the positions of two connection portions 43j and 43k at which the cylindrical member pieces 43a and 43b are connected to each other are different from each other in the long-side direction. In the fourth cylindrical member 44, the positions of two connection portions 44j and 44k at which the cylindrical member pieces 44a and 44b are connected to each other are different from each other in the long-side direction.

The connection portions of one of the cylindrical members 40 and the connection portions of another one of the cylindrical members 40 among adjacent ones of the cylindrical members 40 are arranged at different positions in the circumferential direction, that is, in the long-side direction in the present embodiment. Specifically, for example, the connection portion 41j of the first cylindrical member 41 is disposed at a position different from the connection portion 42j of the second cylindrical member 42 in the long-side direction.

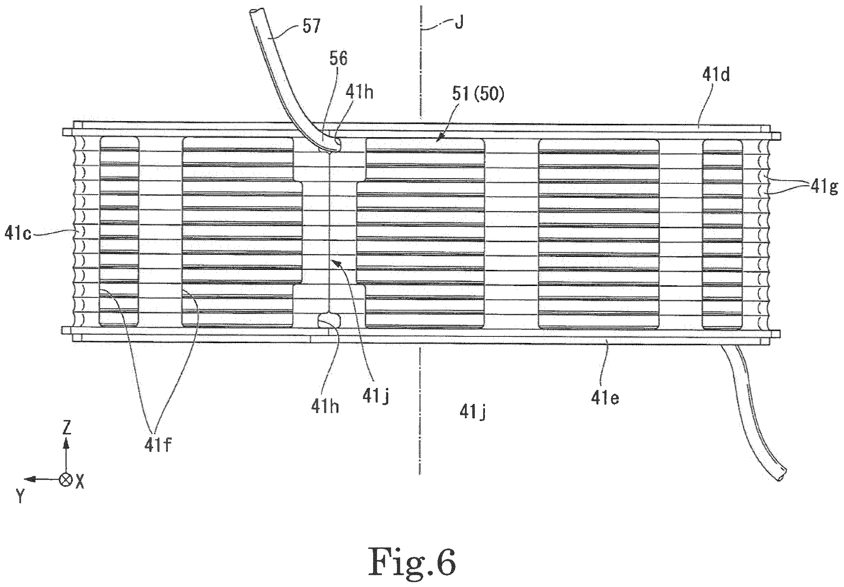

As illustrated in Fig. 6, in the connection portion 41j, holding holes 41h that penetrate the wall portion 41c of the first cylindrical member 41 from a radial-direction-inner-side surface of the first cylindrical member 41 to a radial-direction-outer-side surface of the first cylindrical member 41 are provided. In the present embodiment, the holding holes 41h penetrate the wall portion 41c in the short-side direction. The holding holes 41h are provided in the upper end portion of the wall portion 41c and the lower end portion of the wall portion 41c. The holding holes 41h are provided across the cylindrical member piece 41a and the cylindrical member piece 41b. Although illustration is omitted, holding holes are similarly provided for the connection portion 41k.

A conductive wire 56 connecting the coils 50 to each other is passed through the holding holes 41h. That is, the holding holes 41h hold the conductive wire 56. Specifically, in Fig. 6, the conductive wire 56 extending from the winding end of the first coil 51 is held in the holding hole 41h. Therefore, after the first coil 51 is wound, it is possible to stably hold a coil conductive wire portion 57 that is wound next and becomes the second coil 52. This makes it easy to wind the second coil 52. In addition, it is possible to suppress loosening of the first coil 51.

The core 60 illustrated in Fig. 5 has a rectangular parallelepiped shape that extends in the axial direction. The plan view shape of the core 60 is a rectangular shape elongated in the long-side direction. The core 60 is made to pass on the radial-direction inner side of the coils 50. The core 60 is inserted and held in the hole portion 31f. In the present embodiment, the core 60 is fitted into the hole portion 31f. The core 60 is a magnetic body. The core 60 is, for example, a ferrite core. By providing the core 60, it is possible to improve the power transmission efficiency of the contactless power supply device in which the contactless power supply coil unit 10 is mounted.

Next, a method of assembling the contactless power supply coil unit 10 of the present embodiment will be described. The assembler winds a conductive wire around the core member 30 from the lower side to the upper side and creates the first coil 51. As illustrated in Fig. 5, the assembler brings the cylindrical member piece 41a and the cylindrical member piece 41b toward the core member 30 from both sides in the long-side direction and combines them as illustrated in Fig. 6. At this time, the assembler inserts the upper-side flange portion 41d and the lower-side flange portion 41e of the first cylindrical member 41 into the body portion 31. Thereby, the first cylindrical member 41 is manufactured, and the first coil 51 is held down from the radial-direction outer side. The coil conductive wire portion 57 on the winding end side of the first coil 51 is drawn out of the first cylindrical member 41 from the holding hole 41h on the upper side. The base of the coil conductive wire portion 57, that is, the conductive wire 56 connecting the coils 50 to each other is held in the holding hole 41h.

Thereafter, the assembler winds the coil conductive wire portion 57 around the first cylindrical member 41 from the upper side to the lower side to manufacture the second coil 52. Then, the assembler brings the cylindrical member piece 42a and the cylindrical member piece 42b toward the first cylindrical member 41 from both sides in the long-side direction and combines them. At this time, the assembler engages the upper-side flange portion and the lower-side flange portion of the second cylindrical member 42 with the inner-side flange portions of the first cylindrical member 41. As a result, the second cylindrical member 42 is manufactured and the second coil 52 is held down from the radial-direction outer side. Thereafter, similarly, the coils 50 and the cylindrical members 40 are alternately fabricated, and the assembler assembles the contactless power supply coil unit 10. According to this configuration, the assembler can assemble each of the cylindrical members 40 without stopping the operation of winding the coils 50.

The present invention is not limited to the above-described embodiment, and other configurations may be adopted. The intervals D1 to D4 may be any values as long as they become larger as the intervals are located progressively toward the radial-direction outer side. For example, the difference between the interval D1 and the interval D2, the difference between the interval D2 and the interval D3, and the difference between the interval D3 and the interval D4 may be the same or different. In addition, the number of the coils 50 may be two or more, four or less, or six or more.

In addition, in another embodiment, each of the cylindrical members 40 may be configured by connecting two cylindrical member pieces facing each other in the axial direction. The assembler winds a conductive wire around the core member 30 from the lower side to the upper side and creates the first coil 51. Then, the assembler brings the cylindrical member piece 41a on the axial-direction upper side and the cylindrical member piece 41b on the axial-direction lower side toward the core member 30 from both sides in the axial direction and combines them. At this time, the wall portion 41c is formed of two cylindrical member pieces. The wall portion 41c is assembled by chucking two cylindrical member pieces. Thereby, the first cylindrical member 41 is manufactured, and the first coil 51 is held down from the radial-direction outer side. The coil conductive wire portion 57 on the winding end side of the first coil 51 is drawn out of the first cylindrical member 41 from the holding hole 41h on the upper side. The base of the coil conductive wire portion 57, that is, the conductive wire 56 connecting the coils 50 to each other is held in the holding hole 41h. Here, the wall portion 41c has the holding hole 41h for holding the conductive wire 56. The holding hole 41h is formed by two cylindrical member pieces. Thereafter, the assembler winds the coil conductive wire portion 57 around the first cylindrical member 41 from the upper side to the lower side to manufacture the second coil 52. Thereafter, similarly, the coils 50 and the cylindrical members 40 are alternately fabricated, and the assembler assembles the contactless power supply coil unit 10. Therefore, according to this configuration, the assembler can assemble each of the cylindrical members 40 without stopping the operation of winding the coils 50.

In addition, the shape of the coils 50 in plan view is not particularly limited as long as the coils 50 are wound around the center axis J, and may be an annular shape, an elliptical annular shape, a triangular shape, or an annular shape having five corners or more. In addition, the plan view shape of the cylindrical members 40 can be appropriately changed according to the plan view shape of the coils 50.

In addition, the number of the cylindrical member pieces forming the plurality of cylindrical members 40 may be three or more. In addition, each of the plurality of cylindrical members 40 may be a single member. In this case, the assembler moves the cylindrical members 40, which have a cylindrical shape, in the axial direction, arranges them on the radial-direction outer side of the core member 30 or a corresponding one of the cylindrical members 40, and assembles the cylindrical members 40. In addition, the cylindrical members 40 need not be provided. In this case, for example, the intervals D1 to D4 between the coils 50 may be formed by an insulating tape or the like. In this case, the insulating tape or the like corresponds to the holding member.

The application of the contactless power supply device in which the contactless power supply coil unit is mounted according to the above embodiment is not particularly limited, and is used, for example, for power supply for an automatic guided vehicle.

Each of the above-described configurations can be appropriately combined to the extent they are not inconsistent with each other.

### (Feature 1)

A contact power supply coil unit includes a plurality of coils wound around a predetermined center axis and a holding member that holds the plurality of coils. The plurality of coils are disposed at intervals so as to overlap each other in a radial direction and form respective annular layers that are stacked in the radial direction. The coils forming the layers that are adjacent to each other are connected in series to each other. The intervals between the layers that are adjacent to each other increase as the intervals are located progressively toward a radial-direction outer side.

### (Feature 2)

In the contactless power supply coil unit according to Feature 1, the holding member includes a core member disposed along the center axis and a plurality of cylindrical members that are disposed at intervals on the radial-direction outer side of the core member and that have a cylindrical shape that surrounds the core member. The plurality of cylindrical members are disposed at intervals so as to overlap each other in the radial direction. Among the plurality of coils, a first coil disposed most toward a radial-direction inner side is wound around the core member. Among the plurality of coils, each of the other coils disposed on the radial-direction outer side of the first coil is wound around a corresponding one of the plurality of cylindrical members.

### (Feature 3)

In the contactless power supply coil unit according to Feature 2, each of the cylindrical members has first through holes that penetrate a wall portion of the cylindrical member from a radial-direction-inner-side surface of the cylindrical member to a radial-direction-outer-side surface of the cylindrical member.

### (Feature 4)

In the contactless power supply coil unit according to Feature 2 or 3, the holding member includes a core, the core member includes a hole portion recessed in an axial direction, and the core is inserted and held in the hole portion.

### (Feature 5)

In the contactless power supply coil unit according to any one of Features 2 to 3, the core member has second through holes penetrating the core member in a direction perpendicular to an axial direction.

### (Feature 6)

In the contactless power supply coil unit according to any one of Features 2 to 5, the core member and the plurality of cylindrical members have a plurality of grooves recessed from a radial-direction-outer-side surface toward the radial-direction inner side, the plurality of grooves extend along a circumferential direction, and the coils are wound along the grooves.

### (Feature 7)

In the contactless power supply coil unit according to any one of Features 2 to 6, each of the cylindrical members is formed by connecting a plurality of cylindrical member pieces divided in the circumferential direction.

### (Feature 8)

In the contactless power supply coil unit according to Feature 7, in connection portions where the cylindrical member pieces are connected to each other, holding holes that penetrate the wall portion of each of the cylindrical members from the radial-direction-inner-side surface of the cylindrical member to the radial-direction-outer-side surface of the cylindrical member are provided, and a conductive wire connecting the coils is made to penetrate and is held by the holding holes.

### Reference Signs List

- 10: contactless power supply coil unit
- 20: holding member
- 30: core member
- 31b: second through hole
- 31c, 41g: grooves
- 31f: hole portion
- 40: cylindrical members
- 41a, 41b, 42a, 42b, 43a, 43b, 44a, 44b: cylindrical member pieces
- 41c: wall portion
- 41f: first through holes
- 41h: holding holes
- 41j, 41k, 42j, 42k, 43j, 43k, 44j, 44k: connection portions
- 50: coils
- 51: first coil
- 56: conductive wire
- 60: core
- D1, D2, D3, D4: intervals
- F: layer
- J: center axis

## Claims

1. A contactless power supply coil unit comprising:
a plurality of coils wound around a predetermined center axis; and
a holding member that holds the plurality of coils,
wherein the plurality of coils are disposed at intervals so as to overlap each other in a radial direction and form respective annular layers that are stacked in the radial direction,
wherein the coils forming the layers that are adjacent to each other are connected in series to each other, and
wherein the intervals between the layers that are adjacent to each other increase as the intervals are located progressively toward a radial-direction outer side.

2. The contactless power supply coil unit according to Claim 1,
wherein the holding member includes
a core member that is disposed along the center axis, and
a plurality of cylindrical members that are disposed with intervals therebetween on the radial-direction outer side of the core member and have a cylindrical shape that surrounds the core member,
wherein the plurality of cylindrical members are disposed at intervals so as to overlap each other in the radial direction,
wherein, among the plurality of coils, a first coil disposed most toward a radial-direction inner side is wound around the core member, and
wherein, among the plurality of coils, each of the other coils disposed on the radial-direction outer side of the first coil is wound around a corresponding one of the plurality of cylindrical members.

3. The contactless power supply coil unit according to Claim 2,
wherein each of the cylindrical members has first through holes that penetrate a wall portion of the cylindrical member from a radial-direction-inner-side surface of the cylindrical member to a radial-direction-outer-side surface of the cylindrical member.

4. The contactless power supply coil unit according to Claim 2 or 3,
wherein the holding member includes a core,
wherein the core member includes a hole portion recessed in an axial direction, and
wherein the core is inserted and held in the hole portion.

5. The contactless power supply coil unit according to any one of Claims 2 to 3,
wherein the core member has second through holes penetrating the core member in a direction perpendicular to an axial direction.

6. The contactless power supply coil unit according to any one of Claims 2 to 5,
wherein the core member and the plurality of cylindrical members have a plurality of grooves recessed from a radial-direction-outer-side surface toward the radial-direction inner side,
wherein the plurality of grooves extend along a circumferential direction, and
wherein the coils are wound along the grooves.

7. The contactless power supply coil unit according to any one of Claims 2 to 6,
wherein each of the cylindrical members is formed by connecting a plurality of cylindrical member pieces divided in the circumferential direction.

8. The contactless power supply coil unit according to Claim 7,
wherein, in connection portions where the cylindrical member pieces are connected to each other, holding holes that penetrate the wall portion of each of the cylindrical members from the radial-direction-inner-side surface of the cylindrical member to the radial-direction-outer-side surface of the cylindrical member are provided, and
wherein a conductive wire connecting the coils is made to penetrate and is held by the holding holes.
